# EUROPÄISCHE PATENTSCHRIFT

(11) **EP 2 686 211 B1**
(45) Veröffentlichungstag und Bekanntmachung des Hinweises auf die Patenterteilung: **18.05.2016**
(21) Anmeldenummer: 12716224.6
(22) Anmeldetag: 14.03.2012
(51) Int. Cl.: B60R 22/195, B60R 22/46

(54) **LINEARANTRIEB**
LINEAR DRIVE
ENTRAÎNEMENT LINÉAIRE

(30) Priorität: 15.03.2011 DE 102011014127
(43) Veröffentlichungstag der Anmeldung: 22.01.2014
(73) Patentinhaber: TRW Automotive GmbH, 73553 Alfdorf (DE)
(72) Erfinder: SCHREIBER, Simon, 73557 Mutlangen (DE); GRAU, Hermann, 73568 Durlangen (DE); KRUKOWSKI, Krzysztof, 73553 Alfdorf (DE)
(74) Vertreter: Prehn, Manfred
(86) Internationale Anmeldenummer: PCT/EP2012/001136
(87) Internationale Veröffentlichungsnummer: WO 2012/123115

(56) Entgegenhaltungen:
- DE-A1-102010 026 113
- GB-A- 2 303 292

## Beschreibung

Die Erfindung betrifft einen Linearantrieb, insbesondere für einen Gurtstraffer.

Linearantriebe, bei denen ein angetriebener Kolben einen vorbestimmten Verschiebeweg zurücklegt, werden als mechanische Antriebselemente eingesetzt. Die lineare Bewegung kann direkt in eine Schub- oder Zugbewegung eingesetzt werden, beispielsweise um ein Gurtschloss zurückzuziehen. Sie kann aber auch, beispielsweise mittels einer Zahnstange, in eine Rotationsbewegung umgesetzt werden, um etwa die Gurtspule eines Gurtaufrollers zu drehen.

Die Bewegungsenergie wird dabei durch Verbrennen eines pyrotechnischen Treibsatzes und die Ausdehnung des dabei entstehenden heißen Gases erzeugt. Die Freisetzung des Gases muss auf die Parameter abgestellt werden, die die Bewegung des bewegten Kolbens bestimmen, wie Gehäusegröße und Masse, um eine optimale Beschleunigung des Kolbens und eine optimale Kraftübertragung zu erreichen. Hierbei hat sich gezeigt, dass es günstig ist, nach Beginn der Bewegung des Bauteils einen Teil des Gases aus der Verbrennungskammer abströmen zu lassen.

Beispielsweise ist hierzu bekannt, im Gehäuse des Linearantriebs in der Wand einer Kolbenaufnahme nahe des pyrotechnischen Treibsatzes, der den Kolben bewegt, eine oder mehrere radiale Öffnungen vorzusehen, die die Kolbenaufnahme mit der Umgebung verbinden. Diese werden kurz nach Beginn der Verschiebung des Kolbens freigegeben, so dass ein Teil des Gases aus der Kolbenaufnahme abströmen kann. Damit kann einerseits eine bewegungsabhängige Drucksteuerung erfolgen und ein gezielter Druckabbau nach erfolgter Kolbenbewegung.

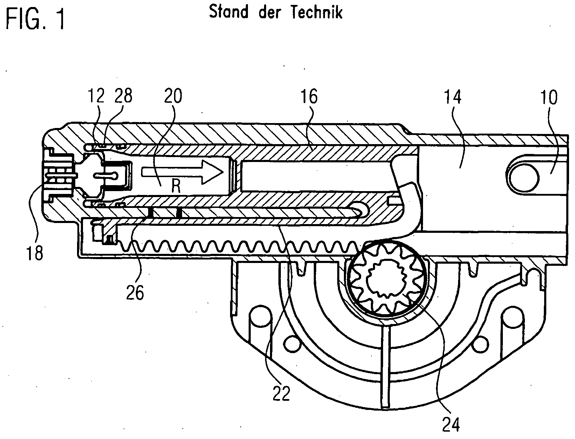

Ein derartiger Linearantrieb ist in der Figur 1 dargestellt. In einem Gehäuse 10 sind eine Kolbenaufnahme 12 sowie ein direkt daran anschließender Hohlraum 14 ausgebildet. Ein Kolbenelement 16 ist in der Kolbenaufnahme 12 angeordnet, und zwar vor Beginn der Verschiebebewegung in Verschieberichtung R direkt am in Figur 1 linken Ende der Kolbenaufnahme 12 in unmittelbarer Nähe zu einem pyrotechnischen Anzünder 18. Das Kolbenelement 16 weist eine Aufnahme 20 auf, in der ein (nicht gezeigter) pyrotechnischer Treibsatz enthalten ist, der den Hauptteil des Antriebsgases liefert, wenn er durch den Anzünder 18 entzündet wird.

Das Kolbenelement 16 ist starr mit einer Zahnstange 22 verbunden, die sich parallel zum Kolbenelement 16 erstreckt und am dem Anzünder 18 abgewandten Ende des Kolbenelements 16 mit diesem verbunden ist. Wenn sich das Kolbenelement 16 in Verschieberichtung R bewegt, greifen die Zähne der Zahnstange 22 in die Zähne eines mit einer nicht weiter dargestellten Gurtspule verbundenen Zahnrads 24 ein und versetzen dieses in Rotation.

In der Wand des Gehäuses 10 sind zwei kleine radiale Bohrungen 26 ausgebildet, die von der Kolbenaufnahme 12 in den Gehäuseabschnitt, in dem die Zahnstange 22 aufgenommen ist, und über diesen in die Umgebung des Gehäuses 10 führen.

Vor Beginn der Verschiebebewegung des Kolbenelements 16 ist die Aufnahme 20 innerhalb des Kolbenelements 16 sowie die Kolbenaufnahme 12 durch ein am anzünderseitigen Ende des Kolbenelements 16 angeordnetes Dichtelement 28, hier einem O-Ring, gegenüber den Bohrungen 26 abgedichtet. Erst wenn das Dichtelement 28 bei der Bewegung des Kolbenelements 16 die Bohrungen 26 passiert hat, strömt Gas aus der Kolbenaufnahme 12 ab.

Das Herstellen der radialen Bohrungen 26 erfordert einen relativ aufwendigen Arbeitsschritt, was die Herstellungszeit verlängert und damit den Linearantrieb verteuert.

Bei einem gattungsgemäßen Linearantrieb gemäß GB2303292 mit einem Gehäuse, einer Kolbenaufnahme, einem verschiebbar in der Kolbenaufnahme aufgenommenen Kolbenelement und einem pyrotechnischen Antriebselement, das Gas zur Verschiebung des Kolbenelements liefern kann, weist die Innenwand der Kolbenaufnahme eine sich in Verschieberichtung des Kolbenelements erstreckende Nut auf, durch die Gas aus der Kolbenaufnahme abströmen kann.

Es ist Aufgabe der Erfindung, die Abströmung des Gases zu verbessern.

Gemäß der Erfindung ist die Nut so gestaltet, dass sie sich in Verschieberichtung erstreckt und bis zum axialen Ende der Kolbenaufnahme reicht, wobei am Kolbenelement wenigstens ein Dichtelement angeordnet ist, das zwischen dem Kolbenelement und der Innenwand der Kolbenaufnahme liegt, aber so ausgebildet ist, dass ein Abströmen von Gas in die Nut bei Eindringen des Dichtelements in den Bereich der Nut nicht verhindert, wobei sich die Nut in Verschieberichtung aufweitet.

Damit wird die Entspannung des Gases gefördert. Über die Gestalt der Nut, zum Beispiel über eine derartige Aufweitung, lässt sich auch die abströmende Gasmenge gezielt und individuell für einen bestimmten Linearantrieb anpassen.

Die Fertigung der Nut in der Innenwand der Kolbenaufnahme ist einfacher zu bewerkstelligen, als Bohrungen in der Gehäusewand vorzunehmen. Durch Breite und Tiefe der Nut lässt sich darüber hinaus das abströmende Gasvolumen sehr genau und sehr einfach einstellen. Aufgrund des langen Wegs entlang der relativ massiven Gehäusewand wird das ausströmende Gas gekühlt. Die Gasabströmung erfolgt in einen umschlossenen Gehäusebereich, der notwendig ist, um das Kolbenelement während dessen Verschiebebewegung aufzunehmen. Dies hat den Vorteil, dass eine Anströmung von Fahrzeugteilen verhindert wird, ohne dass zu diesem Zweck weitere Bauteile vorgesehen werden müssen.

Die Erfindung lässt sich sehr gut in einem Linearantrieb einsetzen, bei dem das Kolbenelement mit einer Zahnstange verbunden ist. Natürlich kann das erfindungsgemäße Prinzip auch bei anderen Linearantrieben umgesetzt werden.

Die Nut ist vorzugsweise so ausgebildet, dass sie eine Gasabströmung in das Gehäuse in Verschieberichtung gesehen vor dem Kolbenelement ermöglicht. Da die Nut radial in der Wand der Kolbenaufnahme angebracht ist, wird die Gasabströmung auch bei Eindringen des Kolbens in diesen Gehäusebereich nicht unterbunden. Durch das Einströmen in einen großvolumigen Gehäusebereich kann sich das aus der Kolbenaufnahme ausströmende Gas weiter entspannen und dadurch abkühlen, bevor es in die Umgebung des Linearantriebs gelangt. Das austretende Gas hat daher keine störenden Auswirkungen mehr auf Fahrzeugteile in der Umgebung des Linearantriebs.

Radiale Öffnungen in der Wand der Kolbenaufnahme sind weder erforderlich noch vorgesehen. Die Nut ist vollständig in der Wand der Kolbenaufnahme aufgenommen, ohne diese nach außen zu durchbrechen.

Vorzugsweise erstreckt sich die Nut über mehr als die Länge des Verschiebewegs, die auch in etwa der Länge des Kolbenelements entspricht. Dadurch ist eine sichere Abströmung des Gases aus der Kolbenaufnahme gewährleistet.

Die Nut und das Kolbenelement sind vorzugsweise so in der Kolbenaufnahme angeordnet, dass vor Beginn der Verschiebung des Kolbens kein Gas in die Nut gelangt. Zunächst wird demnach alles erzeugte Gas verwendet, um einen Druckanstieg in der Kolbenaufnahme herbeizuführen und das Kolbenelement in Bewegung zu setzen. Auf diese Weise können eine hohe Beschleunigung und eine schnelle Verschiebung des Kolbenelements bewirkt werden. Durch das Freigeben der Nut und den Beginn des Abströmens des Gases aus der Kolbenaufnahme kurz nach Beginn der Bewegung des Kolbenelements werden jedoch ein zu hoher Druckaufbau und eine zu hohe Beschleunigung des Kolbenelements vermieden.

Die Länge der Nut liegt beträgt vorzugsweise 35 bis 70mm. Damit ist über nahezu den gesamten Kolbenweg eine sichere und zuverlässige Druckentlastung möglich.

Durch geeignete Positionierung und Dimensionierung der Nut lassen sich zum einen die Druckentlastung bzw. die Druckkurve einstellen, es lässt sich dadurch auch die Straffleistung einstellen. Für eine besonders wirksame Straffleistung bei gleichzeitig optimiertem Druckabbau hat die Nut anfänglich einen Querschnitt, der zwischen etwa 1,5mm² und 9mm² liegt. Bei sich in Verschieberichtung aufweitender Nut steigen die Querschnitte in vorteilhafter Weise auf Werte zwischen etwas 3mm² und 15mm².

Der sich über den Verschiebeweg vergrößernde Querschnitt der Nut bietet darüber hinaus den weiteren Vorteil, dass das vorbeiströmende Gas durch die sich vergrößernde Oberfläche und die gleichzeitige Expansion wirksam abgekühlt wird.

Die Nut ist im Querschnitt vorzugsweise gerundet ausgeführt, wobei insbesondere der Übergangsbereich zwischen Innenwand der Kolbenaufnahme und der Nut gerundet ist. Es ist darüber hinaus vorteilhaft, wenn auch die beiden Übergangsbereiche durch einen entgegengesetzt gerundeten Abschnitt miteinander verbunden sind.

Das Kolbenelement kann wenigstens ein Dichtelement aufweisen, das zwischen dem Kolbenelement und der Innenwand der Kolbenaufnahme liegt, das aber so ausgebildet ist, dass es ein Abströmen von Gas in die Nut nicht vereindert. Sobald das Dichtelement die Nut erreicht hat in axialer bzw. Verschieberichtung, strömt weiterhin Gas aus der Kolbenaufnahme ab, da das Dichtelement die Nut nicht vollständig ausfüllt.

Eine sich in Verschieberichtung aufweitende Nut hat darüber hinaus den Vorteil, dass Beschädigungen der Dichtung beim Einsetzen des Kolbens vermieden werden, da der Übergangsbereich der Nut über den Einschubweg hinweg immer an unterschiedlichen Stellen der Dichtung anliegt. Besonders vorteilhaft ist es in diesem Fall, wenn scharfkantige Übergangsbereiche zwischen Nut und der Innenwand der Kolbenaufnahme vermieden werden bzw. wenn die Übergangsbereiche gerundet ausgeführt werden.Die Erfindung wird nachfolgend anhand eines Ausführungsbeispiels und im Zusammenhang mit den beigefügten Figuren näher beschrieben. In den Zeichnungen zeigen:
- Figur 1 eine schematische Schnittansicht eines Linearantriebs gemäß dem Stand der Technik; und
- Figur 2 eine schematische Schnittansicht eines erfindungsgemäßen Linearantriebs ohne die beweglichen mechanischen Bauteile.
Figur 1, die in der Einleitung bereits ausführlich beschrieben wurde, zeigt einen bekannten Linearantrieb.

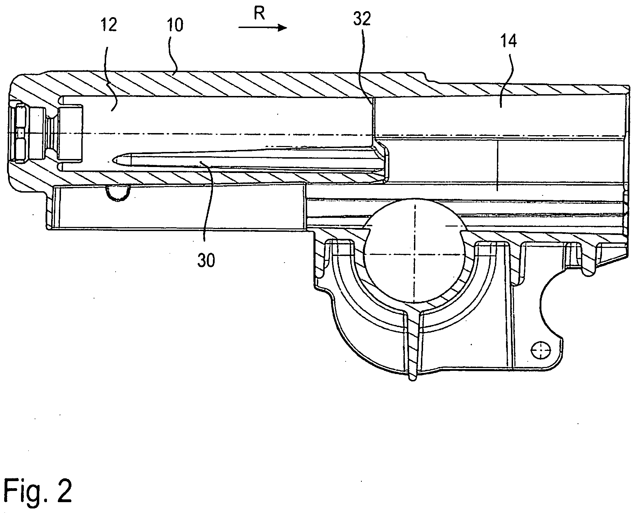

Der in Figur 2 dargestellte erfindungsgemäße Linearantrieb unterscheidet sich von dem in Figur 1 gezeigten Linearantrieb im Wesentlichen in der Weise, wie für eine Abströmung des Gases aus der Kolbenaufnahme gesorgt wird. Die in Figur 2 nicht dargestellten Bauteile können so wie bei dem bekannten Linearantrieb gezeigt gestaltet sein. Aus diesem Grund werden auch die bisher eingeführten Bezugszeichen für die Bauteile des erfindungsgemäßen Linearantriebs in Figur 2 weiter verwendet.

Das Gehäuse 10 des Linearantriebs weist eine Kolbenaufnahme 12 und einen axial direkt daran anschließenden Hohlraum 14 auf, in den sich das hier nicht dargestellte Kolbenelement 16 bei seiner Verschiebung in Verschieberichtung R hineinbewegt. Der Hohlraum 14 steht in Strömungsverbindung mit der Umgebung des Linearantriebs.

Eine ebenfalls nicht dargestellte Zahnstange 22 treibt ein gleichfalls nicht gezeigte Zahnrad 24 an, das mit der Gurtspule eines (nicht näher dargestellten) Gurtaufrollers verbunden ist.

In der Innenwand der Kolbenaufnahme 12 ist eine Nut 30 ausgespart, die sich in Verschieberichtung R erstreckt und die bis zum axialen Ende 32 der Kolbenaufnahme 12 reicht. Anzünderseitig beginnt die Nut 30 ein kurzes Stück entfernt vom Anzünder 18 (von dem nur die Aufnahme dargestellt ist).

Vor Aktivierung des Linearantriebs und vor Bewegen des Kolbenelements 16 ist die Kolbenaufnahme 12 gegenüber der Nut 30 durch das Dichtelement 28 am Kolbenelement 16 gasdicht abgeschlossen. Erst wenn sich das Kolbenelement 16 soweit in Verschieberichtung R bewegt hat, dass das Dichtelement 28 den Beginn der Nut 30 erreicht hat, beginnt Gas, aus der Kolbenaufnahme 12 in den Hohlraum 14 abzuströmen. Die Nut 30 ist in etwa so lang ausgebildet wie der gesamte Verschiebeweg des Kolbenelements 16.

Das Dichtelement 28 ist so ausgebildet, dass es auch bei Erreichen der Nut 30 diese nicht ausfüllt und somit abdichtet, sondern eine Gasausströmung aus der Kolbenaufnahme 12 während des gesamten weiteren Verschiebewegs ermöglicht.

## Patentansprüche

1. Linearantrieb, insbesondere für einen Gurtstraffer, mit einem Gehäuse (10) mit einer Kolbenaufnahme (12), einem verschiebbar in der Kolbenaufnahme (12) aufgenommenen Kolbenelement (16) und einem pyrotechnischen Antriebselement, das Gas zur Verschiebung des Kolbenelements (16) liefern kann,
wobei die Innenwand der Kolbenaufnahme (12) eine sich in Verschieberichtung (R) des Kolbenelements (16) erstreckende Nut (30) aufweist, durch die Gas aus der Kolbenaufnahme (12) abströmen kann,
**dadurch gekennzeichnet, dass** sich die Nut (30) in Verschieberichtung (R) erstreckt und bis zum axialen Ende (32) der Kolbenaufnahme (12) reicht, und dass am Kolbenelement (16) wenigstens ein Dichtelement (28) angeordnet ist, das zwischen dem Kolbenelement (16) und der Innenwand der Kolbenaufnahme (12) liegt, aber so ausgebildet ist, dass ein Abströmen von Gas in die Nut (30) bei Eindringen des Dichtelements (28) in den Bereich der Nut (30) nicht verhindert, und dass sich die Nut (30) in Verschieberichtung (R) aufweitet.

2. Linearantrieb nach Anspruch 1, **dadurch gekennzeichnet, dass** das Kolbenelement (16) mit einer Zahnstange (22) verbunden ist.

3. Linearantrieb nach einem der vorhergehenden Ansprüche, **dadurch gekennzeichnet, dass** die Nut (30) so ausgebildet ist, dass sie eine Gasabströmung in das Gehäuse (10) in Verschieberichtung (R) gesehen vordem Kolbenelement (16) ermöglicht.

4. Linearantrieb nach einem der vorhergehenden Ansprüche, **dadurch gekennzeichnet, dass** sich die Nut (30) über mehr als die Länge des Verschiebewegs erstreckt.

5. Linearantrieb nach einem der vorhergehenden Ansprüche, **dadurch gekennzeichnet, dass** die Nut (30) und das Kolbenelement (16) so in der Kolbenaufnahme (12) angeordnet sind, dass vor Beginn der Verschiebung des Kolbenelements (16) kein Gas in die Nut (30) gelangt.

6. Linearantrieb nach einem der vorhergehenden Ansprüche, **dadurch gekennzeichnet, dass** die Länge der Nut zwischen 35mm und 70mm beträgt.

7. Linearantrieb nach einem der vorhergehenden Ansprüche, **dadurch gekennzeichnet, dass** die Querschnittsfläche der Nut größer als 1,5mm² ist.

8. Linearantrieb nach einem der vorhergehenden Ansprüche, **dadurch gekennzeichnet**, das die Querschnittsfläche der Nut kleiner als 15mm² ist.

## Claims

1. A linear drive, especially for a belt tensioner, comprising a casing (10) including a piston seat (12), a piston element (16) movably received in the piston seat (12) and a pyrotechnical drive element which is adapted to provide gas for displacing the piston element (16),
wherein the inner wall of the piston seat (12) includes a groove (30) extending in the displacing direction (R) of the piston element (16) through which gas may discharge from the piston seat (12),
**characterized in that** the groove (30) extends in the displacing direction (R) and reaches to the axial end (32) of the piston seat (12) and **in that** at the piston element (16) at least one sealing element (28) is arranged which is located between the piston element (16) and the inner wall of the piston seat (12) but is configured so that it does not prevent gas from discharging into the groove (30) when the sealing element (28) penetrates the area of the groove (30), and **in that** the groove (30) widens in the displacing direction (R).

2. The linear drive according to claim 1, **characterized in that** the piston element (16) is connected to a toothed rack (22).

3. The linear drive according to any one of the preceding claims, **characterized in that** the groove (30) is configured so that it enables discharge of gas into the casing (10) ahead of the piston element (16) viewed in the displacing direction (R).

4. The linear drive according to any one of the preceding claims, **characterized in that** the groove (30) extends over more than the length of the displacing distance.

5. The linear drive according to any one of the preceding claims, **characterized in that** the groove (30) and the piston element (16) are arranged in the piston seat (12) so that prior to the beginning of displacement of the piston element (16) no gas enters into the groove (30).

6. The linear drive according to any one of the preceding claims, **characterized in that** the length of the groove is between 35 mm and 70 mm.

7. The linear drive according to any one of the preceding claims, **characterized in that** the crosssectional area of the groove is larger than 1.5 mm².

8. The linear drive according to any one of the preceding claims, **characterized in that** the crosssectional area of the groove is smaller than 15 mm².

## Revendications

1. Dispositif d'entraînement linéaire, en particulier pour un prétensionneur de ceinture, comprenant un boîtier (10) avec un logement de piston (12), un dit piston (16) pouvant se déplacer dans le logement de piston (12) et un élément pyrotechnique d'entraînement pouvant délivrer du gaz pour déplacement du piston (16),
dans lequel la paroi intérieure du logement de piston (12) possède une rainure (30) s'étendant dans la direction de déplacement (R) du piston (16) à travers laquelle le gaz du logement de piston (12) peut sortir,
**caractérisé en ce que** la rainure (30) s'étend dans la direction de déplacement (R) et se prolonge jusqu'à l'extrémité axiale (32) du logement de piston (12), et **en ce qu'**au moins un élément d'étanchéité (28) est disposé sur le piston (16), qui se trouve entre le piston (16) et la paroi intérieure du logement de piston (12), mais est formé de sorte que la sortie des gaz par la rainure (30) n'est pas empêchée lors de la pénétration de l'élément d'étanchéité (28) dans la zone de la rainure (30), et que la rainure (30) s'élargit dans la direction (R).

2. Dispositif d'entraînement linéaire selon la revendication 1, **caractérisé en ce que** le piston (16) est relié à une crémaillère (22).

3. Dispositif d'entraînement linéaire selon l'une quelconque des revendications précédentes, **caractérisé en ce que** la rainure (30) est formée de sorte que, une sortie des gaz dans le boîtier (10) est rendue possible dans la direction de déplacement (R) devant le piston (16).

4. Dispositif d'entraînement linéaire selon l'une quelconque des revendications précédentes, **caractérisé en ce que** la rainure (30) s'étend au-delà de la longueur de la course de déplacement.

5. Dispositif d'entraînement linéaire selon l'une quelconque des revendications précédentes, **caractérisé en ce que** la rainure (30) et le piston (16) sont agencés dans le logement de piston (12) de sorte que, avant le début du déplacement de l'élément de piston (16) aucun gaz ne passe dans la rainure (30).

6. Dispositif d'entraînement linéaire selon l'une quelconque des revendications précédentes, **caractérisé en ce que** la longueur de la rainure se situe entre 35rnm et 70mm.

7. Dispositif d'entraînement linéaire selon l'une quelconque des revendications précédentes, **caractérisé en ce que** la surface de section transversale de la rainure est supérieure à 1,5 mm².

8. Dispositif d'entraînement linéaire selon l'une quelconque des revendications précédentes, **caractérisé en ce que** la surface de section transversale de la rainure est inférieure à 1,5 mm².
